# EUROPÄISCHE PATENTANMELDUNG

(11) **EP 0 768 136 A1**
(43) Veröffentlichungstag der Anmeldung: **16.04.1997**
(21) Anmeldenummer: 96202788.4
(22) Anmeldetag: 08.10.1996
(51) Int. Cl.: B23B 51/04

(54) **Werkzeug mit innenliegender Kühlmittelzufuhr**

(30) Priorität: 11.10.1995 AT 548/95 U
(71) Anmelder: PLANSEE TIZIT GESELLSCHAFT M.B.H., 6600 Reutte/Tirol (AT)
(72) Erfinder: Duwe, Jürgen, 6611 Heiterwang (AT); Maier, Johann, 6600 Pflach (AT); Rofner, Rudolf, 6611 Heiterwang (AT)
(74) Vertreter: Lohnert, Wolfgang, Dr.

(57) **Zusammenfassung**

Die Erfindung betrifft ein Werkzeug -1- zur Herstellung und/oder Bearbeitung von Bohrungen in metallischen Werkstoffen. Erfindungsgemäß weist das Werkzeug -1- eine oder mehrere Kühlmittelbohrungen -2- auf, wobei zumindest ein in eine Spannut -4- mündender Austrittskanal -3- unter einem Winkel α von mindestens 20° zu einer Senkrechten S auf die Werkzeugachse A nach rückwärts gerichtet ist.

## Beschreibung

Die Erfindung betrifft ein Werkzeug zur Herstellung und/oder Bearbeitung von Bohrungen in metallischen Werkstoffen mit einer oder mehreren Spannuten und mit Einrichtungen zur innenliegenden Kühlmittelzufuhr.

Werkzeuge zur Herstellung und/oder Bearbeitung von Bohrungen in metallischen Werkstoffen sind in den unterschiedlichsten Ausführungen bekannt. Werkzeuge, die vollständig aus einem hochverschleißfesten Schneidwerkstoff, wie Hartmetall, hergestellt sind, kommen ebenso zum Einsatz wie Werkzeuge, bei denen ein oder mehrere Schneideinsätze aus Schneidwerkstoff auf einem Grundkörper aufgelötet oder auswechselbar befestigt sind. Alle genannten Werkzeug-Varianten weisen gerade oder wendelförmig ausgeführte Spannuten zur Spanabfuhr auf. Zur Kühlung der Schneidkanten und zur Verbesserung der Spanabfuhr wird über ein oder mehrere innenliegende Kanäle mit ein oder mehreren Austrittsöffnungen Kühlmittel zugeführt. Die DE-OS 27 33 705, DE-OS 33 14 347 oder WO94/13422 beschreiben beispielsweise derartige Werkzeuge.

Allen diesen bisher bekannten Werkzeugen ist gemeinsam, daß die Kühlmittelbohrungen in unmittelbarer Nähe der Schneidkanten austreten und derart verlaufen, daß der Kühlmittelstrahl direkt über die Schneidkanten oder an der Stirnseite des Werkzeuges auf den Bohrungsgrund gerichtet ist. Mit einer derartigen Anordnung der Kühlmittelbohrungen wird zwar eine brauchbare Kühlung der Schneidkanten erreicht, die Abfuhr der Späne aus der Bohrung durch das am Bohrungsgrund umgeleitete Kühlmittel ist jedoch in vielen Fällen, insbesondere bei tiefen Bohrungen, nicht ausreichend.

Aufgabe der vorliegenden Erfindung ist es daher, ein Werkzeug mit innenliegender Kühlmittelzufuhr zur Herstellung und/oder Bearbeitung von Bohrungen in metallischen Werkstoffen zu schaffen, bei dem die in Einsatz befindlichen Schneidkanten in ausreichender Weise gekühlt werden und gleichzeitig eine verbesserte Ausbringung der Späne aus der Bohrung gewährleistet ist.

Erfindungsgemäß wird dies dadurch erreicht, daß zumindest ein in die Spannut(en) mündender Austrittskanal einer Kühlmittelbohrung - in Bohrungsrichtung gesehen - unter einem Winkel α von mindestens 20° zu einer Senkrechten S auf die Werkzeugachse A, nach rückwärts gerichtet ist. Auf diese Art und Weise wird zumindest ein Teil des Kühlmittelstrahles von Anfang an in Richtung Bohrungsöffnung geleitet, so daß die Späne mit vollem Druck des direkt zugeführten Kühlmittels nach außen befördert werden. Je nach Tiefe der herzustellenden Bohrung kann es sinnvoll sein, entlang des Werkzeugschaftes mehrere Austrittskanäle entlang der Spannut versetzt hintereinander anzuordnen, um auch bei tiefen Bohrungen eine gute Ausbringung der Späne zu gewährleisten.

Um eine ausreichende Kühlung der Schneidkante zu erhalten, muß das Kühlmittel gleichzeitig direkt über die Schneidkante oder in unmittelbarer Nähe derselben in Richtung zum Bohrungsgrund gerichtet sein. Bei Werkzeugen mit einer einzigen Kühlmittelbohrung erfolgt dies durch einen zusätzlichen Austrittskanal in Richtung Bohrungsgrund. Bei mehreren Kühlmittelbohrungen kann eine Kühlmittelbohrung ausschließlich in Richtung Bohrungsgrund münden und eine zweite oder weitere ausschließlich in nach rückwärts gerichtete Kanäle münden. Bei Verwendung einer einzigen Kühlmittelleitung ist es zweckmäßig, wenn sich der in Richtung Bohrungsgrund gerichtete Austrittskanal nach der Abzweigung in den nach rückwärts gerichteten Austrittskanal verengt, wodurch sich ein ausreichender Druckaufbau des Kühlmittels für den nach rückwärts gerichteten Austrittskanal ergibt.

In einer besonders vorteilhaften Ausgestaltung ist das erfindungsgemäße Werkzeug ein mit einer Wendeschneidplatte bestücktes Bohrwerkzeug mit einer wendelförmigen Spannut, mit einer axial verlaufenden Kühlmittelbohrung, die in einen Austrittskanal übergeht, der in die Spannut mündet und unter einem Winkel α zwischen 35° und 55° nach rückwärts gerichtet ist und mit einer weiteren axial verlaufenden Kühlmittelbohrung, die an der Stirnseite des Werkzeuges in unmittelbarer Nähe der Wendeschneidplatte austritt.

Im folgenden wird die Erfindung anhand von Zeichnungen näher erläutert.

Es zeigen:
- Figur 1: ein erfindungsgemäßes Dreh-Bohrwerkzeug in Seitenansicht, geschnitten
- Figur 2: die Stirnansicht des Dreh-Bohrwerkzeuges gemäß Figur 1
- Figur 3: ein weiteres erfindungsgemäßes Bohrwerkzeug in Seitenansicht, geschnitten
- Figur 4: die Stirnansicht des Bohrwerkzeuges gemäß Figur 3

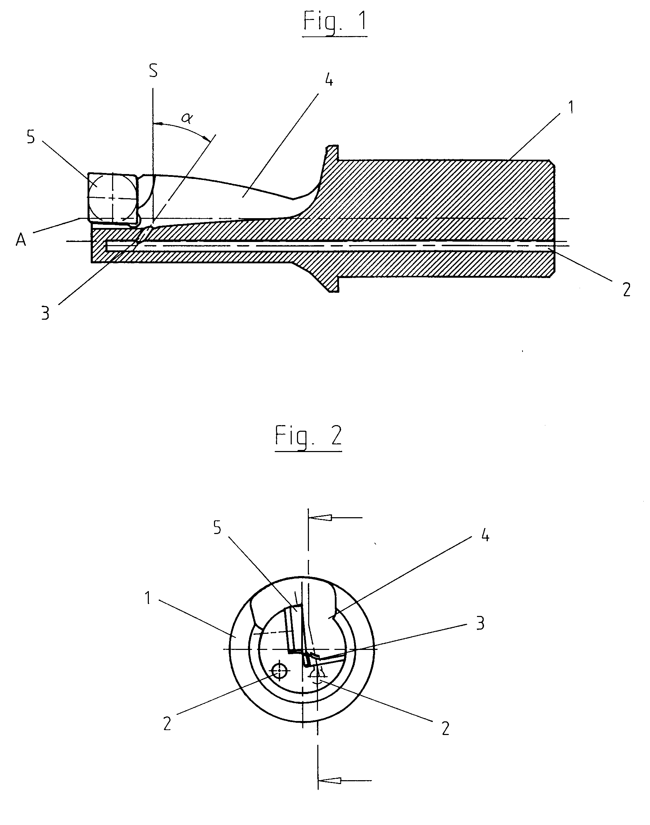

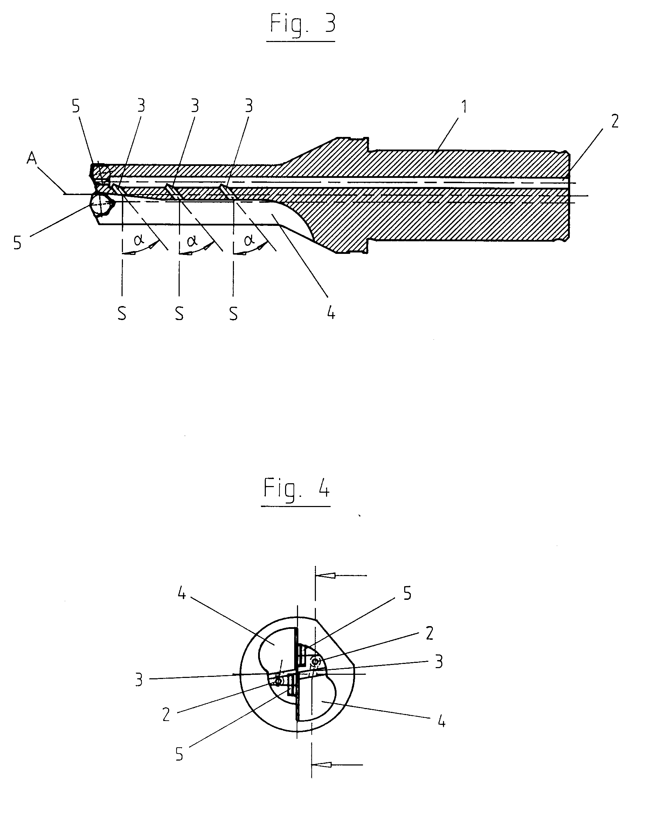

Das Dreh-Bohrwerkzeug -1- entsprechend Figur 1 und Figur 2 weist eine spiralförmig verdrallte Spannut -4- auf, in der stirnseitig in einer entsprechenden Ausnehmung eine über Mitte schneidende Wendeschneidplatte -5- festgeschraubt ist. Das Werkzeug weist zwei axial verlaufende Kühlmittelbohrungen -2- zur Kühlmittelzufuhr auf. Eine Kühlmittelbohrung -2- ist eine Sacklochbohrung, die kurz hinter der Wendeschneidplatte in einen in die Spannut -4- austretenden Austrittskanal -3- mündet, der unter einem Winkel α von 50° zu einer Senkrechten S auf die Werkzeugachse A nach rückwärts gerichtet ist. Die zweite Kühlmittelbohrung -2- tritt auf der Stirnseite des Dreh-Bohrwerkzeuges in unmittelbarer Nähe der Wendeschneidplatte -5- aus und ist Richtung Bohrungsgrund gerichtet.

In den Figuren 3 und 4 ist die Variante eines erfindungsgemäßen Bohrwerkzeuges -1-, das insbesondere zum Bohren tiefer Bohrungen geeignet ist, dargestellt. Das Bohrwerkzeug weist zwei um 180° gegeneinander versetzte gerade Spannuten -4- auf, in denen stirnseitig in entsprechenden Ausnehmungen jeweils eine Wendeschneidplatte -5- durch eine Senkkopfschraube auswechselbar befestigt ist. Das Bohrwerkzeug weist zwei axial verlaufende, jeweils unterhalb einer Spannut -4- angeordnete Kühlmittelbohrungen -2- auf. Jede Kühlmittelbohrung -2- mündet entlang der Spannut -4- in drei, in etwa gleichen Abständen hintereinander angeordnete Austrittsöffnungen -3- die jeweils unter einem Winkel α von 50° zu einer Senkrechten S auf die Werkzeugachse A nach rückwärts gerichtet sind. Nach der am weitesten stirnseitig angeordneten Austrittsöffnung -3- verengen sich die Kühlmittelbohrungen -2- und treten stirnseitig in unmittelbarer Nähe der Wendeschneidplatte -5- in Richtung auf den Bohrungsgrund zu, aus.

## Patentansprüche

1. Werkzeug (1) zur Herstellung und/oder Bearbeitung von Bohrungen in metallischen Werkstoffen mit einer oder mehreren Spannuten (4) und mit Einrichtungen zur innenliegenden Kühlmittelzufuhr,
**dadurch gekennzeichnet**,
daß zumindest ein in die Spannut(en) (4) mündender Austrittskanal (3) einer Kühlmittelbohrung (2) - in Bohrrichtung gesehen - unter einem Winkel α von mindestens 20° zu einer Senkrechten S auf die Werkzeugachse A, nach rückwärts gerichtet ist.

2. Werkzeug nach Anspruch 1, dadurch gekennzeichnet, daß das Werkzeug (1) ein mit einer Wendeschneidplatte (5) bestücktes Bohrwerkzeug mit einer wendelförmigen Spannut (4) ist und daß eine axial verlaufende Kühlmittelbohrung (2) in einen Austrittskanal (3) übergeht, der in die Spannut (4) mündet und unter einem Winkel α zwischen 35° und 55° nach rückwärts gerichtet ist und daß eine weitere axial verlaufende Kühlmittelbohrung (2) an der Stirnseite des Werkzeuges (1) in unmittelbarer Nähe der Wendeschneidplatte (5) austritt.
